Europäisches Patentamt

European Patent Office

Office européen des brevets

(11) Publication number: **0 342 835**
**A1**

# EUROPEAN PATENT APPLICATION

(21) Application number: 89304610.2

(51) Int. Cl.⁴: **G09G 3/36 , G02F 1/137**

(22) Date of filing: 08.05.89

(30) Priority: 18.05.88 GB 8811778

(43) Date of publication of application:
23.11.89 Bulletin 89/47

(84) Designated Contracting States:
AT BE CH DE ES FR IT LI LU NL SE

(71) Applicant: **STC PLC**
**10, Maltravers Street**
**London, WC2R 3HA(GB)**

(72) Inventor: **Ross, Peter William**
**40, Rainsford Road**
**Stansted Essex. CM24 8CA(GB)**

(74) Representative: **Laurence, Simon French et al**
**STC Patents West Road**
**Harlow Essex CM20 2SH(GB)**

(54) **Liquid crystal cell addressing.**

(57) A colour shaded display is provided using a co-ordinate addressed ferroelectric liquid crystal display cell. Monochrome addressing of the display is performed in the normal way to produce bistable switching of the pixels. Then lower voltage pulses (41, 43, 45) are applied to blocks of pixels to produce transient changes of state at particular times synchronised with rapid changes in the colour of backlighting of this cell.

*Fig.4.*

EP 0 342 835 A1

# LIQUID CRYSTAL CELL ADDRESSING

This invention relates to a method of providing colour shading in liquid crystal cells. The pixels of a liquid crystal display cell are typically caused to act as a kind of light valve capable of existing in two optically distinct states in one of which light transmission is unimpeded and in the other of which light transmission is blocked by absorption or is scattered. In essence such an effect is monochromatic.

One method of providing multiple colours relies on the use of individual colour filters, typically red, green and blue, in association with the individual pixels, and typically requires there to be approximately three times the number of pixels as is required to provide the same resolution in a monochrome display. An alternative approach involves backlighting the cell and rapidly and cyclically changing the colour of the illumination while refreshing the displayed image in synchronism. With this arrangement the pattern appropriate to form a red-light image is set up ready for illumination with the red light, and then, after this illumination has terminated, the pattern is changed to one appropriate to form a green light image ready for illumination with green light. After illumination with green light, the process is repeated for forming a blue light image, and then the display is illuminated with blue light. This completes the cycle which is itself continuously repeated. It will be appreciated that for a flicker-free image this alternative approach not only requires fast switching of the different colours of illumination, but also particularly fast switching of the pixels of the cell. For a display of medium resolution having approximately 400 lines of pixels addressed on a line-by-line basis, this means that each line must be addressed in a period of about 10us or less. Ferroelectric liquid crystal cells can be made which have a fast enough response, but there are time constant and power consumption problems in accessing pixels on a co-ordinate basis via transparent electrodes on account of the fact that such electrodes typically exhibit a not insignificant sheet resistivity.

For some applications such as in alphagraphic displays on computer terminal screens it is not necessary to have a full range of colours on the screen. An increasingly common feature is to have multiple windows on the screen, each performing or recording the progress or results of a number of concurrent or sequential tasks. It is often desirable to code these different tasks with a different colour background to help find the task quickly. For these and similar applications a colour shading facility is suitable which uses more restricted addressing, and hence imposes less severe constraints upon switching than is necessary to implement a full colour facility.

According to the present invention there is provided a method of providing a shaded display, in which method the pixels of an illuminated liquid crystal cell exhibiting bistability of operation are selectively addressed on a repetitive basis to produce a patterning of pixels with selected pixels of the cell in a first stable state and unselected pixels in the other stable state, wherein between consecutive ones of said selective addressings the illumination conditions are changed, characterised in that while the illumination conditions are changed a chosen group of the pixels of the cell is twice re-addressed, first to induce a transition only of the selected pixels that are within the chosen group from said first stable state into a metastable state, and second to induce a transition only of the selected pixels that are within the chosen group from said metastable state back into said first stable state, whereby the selected pixels within the chosen group are provided with an appearance distinguished from that of unselected pixels within the chosen group and from both selected and unselected pixels not within the chosen group.

A ferroelectric liquid crystal cell is particularly suited for this purpose on account of the speed of switching obtainable with such devices. In some forms of such cells bistability of operation is maintained in the absence of any sustaining electrical stimulation, but more commonly such sustaining electrical stimulation is required as a background signal upon which switching signals are superimposed. In at least one form of line-by-line co-ordinate addressing of such cells this sustaining signal may be furnished all or in part by the data stream fed in parallel to a set of column electrodes while a set of row electrodes are strobed in series to give the line-by-line addressing.

The invention also provides a liquid crystal display including a liquid crystal cell exhibiting bistability of operation, cell illumination, and means for selectively addressing pixels of the display, wherein said means includes a data store and a controller which is adapted to address a set of said pixels with data from the data store to produce a patterning of said set of pixels, with selected pixels of the set in a first stable state and unselected pixels of the set in the other stable state, the cell being arranged such that pixels in the first state have an appearance contrasting with that of pixels in the other stable state, and characterised in that the controller is adapted then to address at least one subset of said set of pixels to induce a transition of the selected pixels within that subset from the first stable state into a metastable state while the controller also regulates the illumination provided by the illumination means in a manner to provide for those selected pixels within the subset an appearance distinguished from that of both selected and unselected pixels of the set which are excluded from the subset.

There follows a description of a ferroelectric liquid crystal cell and of its addressing in a manner embodying the invention in a preferred form. The description refers to the accompanying drawings in which:

Figure 1 depicts a schematic perspective view of a ferroelectric liquid crystal cell,

Figure 2 depicts the waveforms used to address the cell of Figure 1,

Figure 3 depicts the cell of Figure 1 together with means for backlighting it,

Figure 4 depicts waveforms used for a specific example of colour shading, and

Figure 5 is a block diagram of a drive arrangement for the cell of Figure 1.

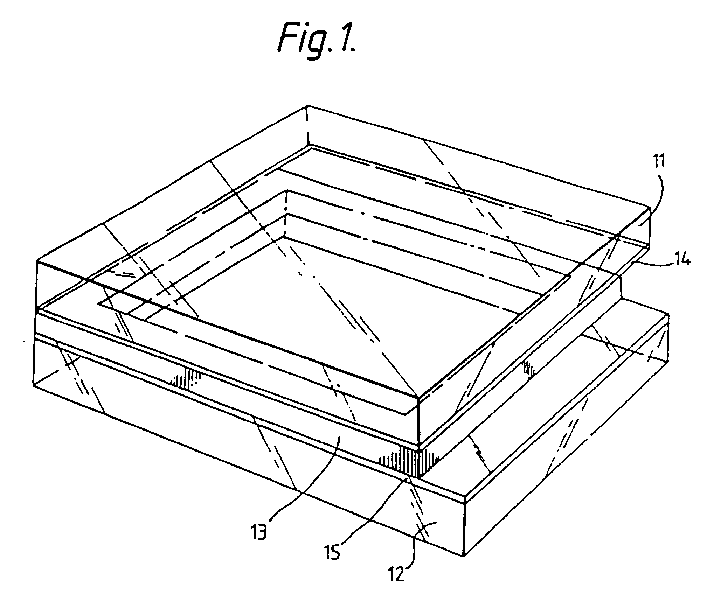

Referring now to Figure 1, a hermetically sealed envelope for a liquid crystal layer is formed by securing together two glass sheets 11 and 12 with a perimeter seal 13. The inward facing surfaces of the two sheets carry transparent electrode layers 14 and 15 of indium tin oxide, and one or sometimes both of these electrode layers is covered within the display area defined by the perimeter seal with a polymer layer, such as nylon (not shown), provided for molecular alignment purposes. The nylon layer is rubbed in a single direction so that, when a liquid crystal is brought into contact with it, it will tend to promote planar alignment of the liquid crystal molecules in the direction of the rubbing. If the cell has polymer layers on both its inward facing major surfaces, it is assembled with the rubbing directions aligned parallel with each other. Before the electrode layers 14 and 15 are covered with the polymer, each one is patterned to define a set of strip electrodes (not shown) that individually extend across the display area and on out to beyond the perimeter seal to provide contact areas to which terminal connection may be made. In the assembled cell the electrode strips of layer 14 extend transversely of those of layer 15 so as to define a pixel at each elemental area where an electrode strip of layer 15 is overlapped by a strip of layer 14. The thickness of the liquid crystal layer contained within the resulting envelope is determined by a light scattering of polymeric spheres of uniform diameterthroughout the area of the cell. Conveniently the cell is filled by applying a vacuum to an aperture (not shown) through one of the glass sheets in one corner of the area enclosed by the perimeter seal so as to cause the liquid crystal medium to enter the cell by way of another aperture (not shown) located in the diagonally opposite corner. (Subsequent to the filling operation the two apertures are sealed.) The filling operation is carried out with the filling material heated into its nematic or isotropic phase so as to reduce its viscosity to a suitably low value. It will be noted that the basic construction of the cell is similar to that of for instance a conventional twisted nematic, except of course for the parallel alignment of the rubbing directions.

Typically the thickness of the perimeter seal 13, and hence of the liquid crystal layer, is between 1.5 and 3 $\mu$m, but thinner or thicker layer thicknesses may be required to suit particular applications. A preferred thickness is 2 $\mu$m. A suitable material for the filling is the smectic C eutectic marketed by BDH of Poole in Dorset under the designation of SCE 3. This material, which exhibits negative dielectric anisotropy at least over the frequency range from 1kHz to 40kHz, passes through the smectic A phase on cooling into the smectic C phase from the isotropic phase. In the case of a 2$\mu$m thick liquid crystal layer confined between the rubbed surfaces the entry of the material into the smectic A phase causes the smectic layers to be formed with bookshelf alignment (layers extending in planes to which the rubbing direction is normal), and this alignment of the smectic layers appears to be preserved when the material makes the transition into the smectic C phase.

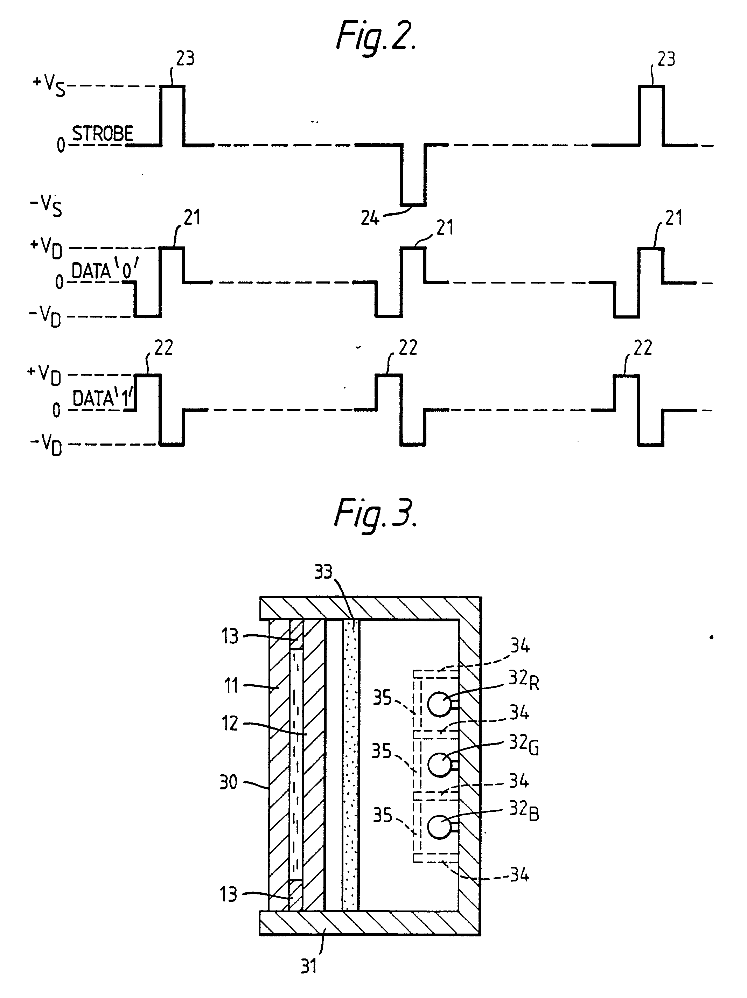

Referring to Figure 2, a preferred way of addressing the cell on a matrix basis employs chargebalanced bipolar data pulses 21, 22 to co-act with positive-going and negative-going unipolar strobe pulses 23, 24. For line-by-line entry of data the strobe pulses are applied serially to the electrode strips of one electrode layer, while the data pulses are applied in parallel to those of the other layer. Data pulse 21, arbitrarily designated a data 'O' pulse, comprises a voltage excursion to $+V_D$ for a duration $t_s$ followed immediately by a voltage excursion to $-V_D$ for a further duration $t_s$. Data pulse 22, arbitrarily designated a data '1' pulse, is similar to data pulse 21, but the order of the voltage excursions is reversed. Strobe pulse 23 comprises a voltage excursion to $+V_S$ for a duration $t_s$ while strobe pulse 24 comprises a voltage excursion to $-V_S$, also of duration $t_s$.

The pixels of the display are defined by the areas of overlap between the members of one set of electrode strips and those of the other. The unipolar strobe pulses are synchronised with the second halves of the data pulses. Therefore when a pixel is simultaneously addressed with a positive-going strobe pulse 23 and a data 'O' pulse 21 it experiences a potential difference of $+V_D$ for a duration $t_s$, followed by a potential difference of

($V_S$-$V_D$), also for a duration $t_s$. A pixel addressed with a strobe pulse 23 and a data '1' pulse 22 experiences a potential difference of -$V_D$ for a duration $t_s$ followed by a potential difference of ($V_S$+$V_D$) for a duration $t_s$. Correspondingly, a pixel addressed simultaneously with a negative-going strobe pulse 24 and a data 'O' pulse 21, experiences a potential difference of +$V_D$ for a duration $t_s$, followed by a potential difference of (-$V_S$+$V_D$). Finally, a pixel addressed with a negative-going strobe pulse 24 and a data '1' pulse 24 experiences a potential difference of -$V_D$ for for aduration $t_s$, followed by a potential difference of -($V_S$-$V_D$) for a duration $t_s$.

In certain circumstances it may be possible to arrange the choice of values of $V_S$ and $V_D$ so that exposure to a voltage excursion of modulus |$V_S$ + $V_D$| for a duration $t_s$ immediately preceded by an oppositely directed voltage excursion of modulus |$V_D$|, also for a duration $t_s$, will induce switching, while exposure to a voltage excursion of modulus |$V_S$-$V_D$| for a duration $t_s$ immediately proceeded by a similarly directed voltage excursion of modulus |$V_D$| also for a duration $t_s$ will not induce switching. Generally however it is preferred to chose the values of $V_S$ and $V_D$ so that the voltage waveform that involves an excursion to a voltage of modulus |$V_S$-$V_D$| effects switching while the waveform that involves an excursion to a voltage of modulus |$V_S$ + $V_D$| does not. Additionally, the values of $V_S$ and $V_D$ must be chosen so that the other stimuli to which a pixel is liable to be exposed do not produce switching. For instance, while other lines are being addressed, a pixel is subjected to a stimulus of magnitude |$V_D$| for a duration $2t_s$ whenever a bipolar data pulse of one data significance is immediately followed by a data pulse of the other data significance. This must not produce switching. Some relaxation of these conditions may be possible by providing intervals between consecutive data pulses, and/or by providing an interval between the two excursions of each bipolar data pulse, and/or by using an asymmetric form of charge balanced bipolar data pulse in which one excursion is m times the amplitude of the other, but only 1/mth its duration.

The positive-going strobe pulse 23 will co-operate with a data '1' pulse to produced a stimulus of magnitude +$V_D$ followed by +($V_S$-$V_D$), and thus is capable of being used to set selected pixels from a 'O' state into a '1' state. A positive-going strobe pulse 23 is not capable however of being used to set pixels from a '1' state into a 'O' state because with neither significance of data pulse will it produce a stimulus of ($V_S$-$V_D$). Conversely a negative-going strobe pulse 24 can set '1' state pixels into the 'O' state but not 'O' state pixels into the '1' state. For this reason each row of the display is addressed in turn using a strobe pulse of one polarity, and then, in order to complete the refreshing of the display, each row is addressed in turn a second time using a strobe pulse of the opposite polarity.

According to one theory of the behaviour of smectic C filled ferroelectric cells with bookshelf alignment of their smectic layers, the molecules should be capable of being switched by single pulses between two stable states in one of which the average direction of the molecular axes lies in the plane of the liquid crystal layer at + $\psi$ to the smectic layer normal, and in the other of which the corresponding angle is - $\psi$. Typically $\psi$ lies in the range 15° - 30°, having an optimum value of 22.5°. In practice however, it is found that the initial response to a single switching pulse relaxes substantially once that pulse has terminated. This relaxation is a great impediment to any form of multiplexing, but it is found that it can be avoided by the superimposing of an alternating potential at a frequency for which the liquid crystal exhibits negative dielectric anisotropy. Such an alternating potential is found to be capable of sustaining the switching of the cell substantially in either one of its two fully switched states.

When the addressing of the pixels of the cell of Figure 1 is achieved using the addressing scheme of Figure 2, the data stream is found, under appropriate conditions, to provide a sufficient alternating voltagestimulus to the pixels between consecutive refreshings to prevent any appreciable relaxation effects without having to have recourse to any separate signal for sustaining purposes. The optimum values of $V_S$ and $V_D$ for any given liquid crystal mixture are generally a function of temperature of operation, and so at the higher end of a service temperature range the sustaining signal provided by the data stream may be inadequate on its own. Under these circumstances an additional sustaining signal at an even multiple of the fundamental frequency defined by the data stream pulses may be switched in after the manner described in the United Kingdom specification GB - A - 2 207 272, to which attention is directed.

Thus far in the specific description relating to Figures 1 and 2, neither the display cell, nor the manner of its operation, have been distinguished from that that may be used for monochrome operation. Colour shading is provided by making special arrangements for illumination of the cell, and by modifications to its addressing to enable the addressing of specific blocks of pixels in a time interval between consecutive full page refreshings of the cell on a line-by-line basis. Illumination for the cell is provided by backlighting. For this purpose the cell of Figure 1, depicted at 30 in Figure 3, is mounted in the front face of a light box 31.

Red, green and blue fast switching fluorescent discharge lamps $32_R$, $32_G$ and $32_B$ are mounted on the inward facing rear wall of the light box, and a diffuser 33 is mounted between the lamps and the cell 30, preferably close behind or in contact with the cell. Additionally there may be included a white light fast switching fluorescent discharge lamp (not shown). In the event that it is not possible or not convenient to employ discharge lamps that switch fast enough, they box may include additional partitioning 34 and individual light valves 35. The latter may be constituted by fast switching liquid crystal cells.

To illustrate how colour shading is achieved with the arrangement of Figure 3 it will be supposed by way of example that a display is formed of white characters set against a black background, and that within that display it is desired to create a rectangular area where the white characters are set against a red background instead of the black one. For this purpose the display is refreshed in order to create the requisite monochrome image. This image is illuminated with white light to create a black-and-white image of white characters set against a black background using white light derived either from the three coloured discharge lamps, or from the white light discharge lamp, or from all four lamps together. Then the cell is illuminated with light from each of the coloured lamps in turn before the display is updated with the next refreshing. To obtain the desired red background for the selected rectangular area, the pixels of that area are addressed as a single block with reduced amplitude transient turn-on and transient turn-off pulses respectively near the beginning and near the end of the period of illumination solely with the red lamp. The transient turn-on pulse induces a transient change of all the non-transmitting (black) pixels within the area temporarily into their transparent (white) state, and later the transient turn-off pulse induces the opposite transition so that all those pixels revert to their original non-transmitting state. Reduced amplitude pulses are employed for transient turn-on so that the initially non-transmitting pixels are not fully switched into their transparent state. Transient turn off pulses are operative only in respect of those pixels that were formerly in the non-transmitting state. Thus, at the end of the illumination with the red light, the states of all the pixels of the display are restored substantially to the states they were in prior to illumination with this light. The potential developed across the thickness of the liquid crystal layer by addressing with a transient turn-on pulse is typically in the region of half that employed to effect full switching in the writing of the monochrome image. Depending upon the characteristics of the particular liquid crystal medium employed in the cell, it may be possible to develop the same potential across the thickness of the liquid crystal layer in the addressing with a transient turn-off pulse as is employed in the addressing with a transient turn-on pulse. In some instances however this is not acceptable because it will have too great an effect upon pixels set into their transmitting state prior to the addressing with the turn-on pulse. Under these circumstances a still smaller potential is used for transient turn-off. In these circumstances it may be necessary to lengthen the duration of such pulses by an appropriate amount in order to preserve charge balance.

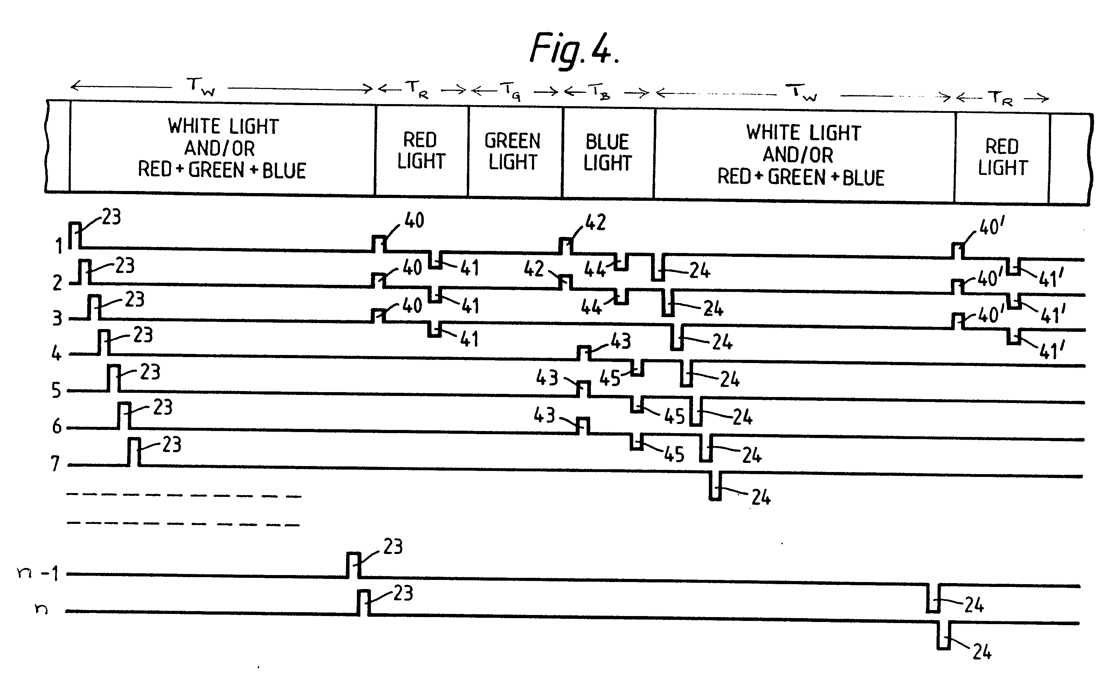

Figure 4 depicts the strobe waveforms applied to a number of row electrodes for the generation of a specific example of a colour shaded display. Strobe pulses 23 are applied sequentially to the rows while data pulses (not shown in this figure) are applied in parallel to the columns. While this data entry is proceeding the cell is illuminated with white light derived either from the white discharge lamp (not shown), the three coloured discharge lamps (not shown in this figure) operated simultaneously, or from all four lamps together. Then, in order to provide red colour shading for a particular rectangular block of pixels defined by its corners (p,1), (g,1), (p,3) and (g,3), while only the red lamp is on, reduced amplitude transient turn-on pulses 40 are applied simultaneously to row numbers 1, 2 and 3. At the same time data '1' pulses of the general form depicted at 22 in Figure 2, but not depicted in Figure 4, are applied in parallel to columns p to q inclusive while data '0' pulses of the general form depicted at 21 in Figure 2 are applied in parallel to all other columns. The preferred amplitudes of these data pulses co-operating with the transient turn-on pulses will need to be determined having regard to the competing requirements of minimising the amplitudes of spurious signals appearing at non-selected pixels, and of ensuring that the data pulses continue to provide an adequate alternating voltage component required for sustaining the switching of the non-selected pixels in their substantially fully switched stages. If these two competing requirements prove too difficult to meet in this way, the sustaining voltage may alternatively be provided by the application of an alternating potential whose fundamental frequency is an even multiple of the fundamental frequency of a data pulse.

The transient turn-on pulses 40 are followed by transient turn-off pulses 41 before the end of the illumination solely with the red lamp. These co-operate with data '0' pulses applied in parallel to columns p to q inclusive while data '1' pulses are applied in parallel to the other columns. These transient turn-off pulses 41 are represented in Figure 4 as being of the same amplitude as that of the transient turn-on pulses 40, but as explained previously they may be of reduced amplitude. If they are of reduced amplitude it will normally be necessary to make them correspondingly longer in duration in order to preserve charge balance on each individual row.

In the specific example of Figure 4, no blocks of pixels are depicted as being provided with green colour shading, but two separate blocks are depicted as being provided with blue colour shading. The first of these two blocks, defined by its corner pixels (r,1), (s,1), (r,2) and (s,2), is addressed by transient turn-on pulses 42 applied in parallel to rows 1 and 2 to co-operate with data '1's applied to columns r to s inclusive while data '0's are applied to the other columns. The second of the two blocks defined by its corner pixels (t,4), (u,4), (t,6) and (u,6) is similarly addressed using transient turn-on pulses 43. Transient turn-on pulses 43 are displaced in time with respect to transient turn-on pulses 42 so as to avoid the spurious addressing of two further blocks of pixels, namely that defined by corner pixels (t,1), (u,1), (t,2) and (u,2), and that defined by corner pixels (r,4), (s,4), (r,6) and (s,6). Transient turn-on pulses 42 and 43 are followed in time respectively by transient turn-off pulses 44 and 45. These can safely occur simultaneously, but pulses 45 have been shown displaced in time with respect to pulses 44 in order to leave the same interval between turn-on and turn-off for both blocks and so provide the same brightness of colour shading.

Data entry is recommenced after the ending of the illumination solely with the blue lamp. The preceding data entry involved the use of positive going strobe pulses, and so was capable of inducing data '0' to data '1' transitions, but not transitions in the opposite direction. Hence this data entry involves the use of negative-going strobe pulses 24. This is followed by a repetition of the cycle of separate illumination with the red, green and blue lamps, together with pulsing with transient turn-on and turn-off pulses, before the commencement of the next refreshing, which once again employs positive-going strobe pulses. There is no corresponding alternation of the polarity of the transient turn-on and turn-off pulses because turn-on and turn-off are both unidirectional transitions. (In Figure 4 there is space only for depicting the reinforcement of the red colour shading which employs transient turn-on and turn-off pulses 40' and 41' which are a repeat of pulses 40 and 41).

The requirement to produce a flicker-free image sets an upper limit to the amount of time that can elapse between consecutive periods of illumination with light of a particular colour, green, blue or red. The cycle time is $T_W + T_R + T_G + T_B$, where $T_W$ is the duration of white light illumination during which the display is refreshed to create the requisite monochrome image, and $T_R$, $T_G$ and $T_B$ are the respective durations of illumination solely with the red light, solely with green, and solely with blue. Normally the duration $T_R + T_G + T_B$ can conveniently be made significantly shorter than $2T_W$, under which circumstances it is seen that the use of the invention affords a saving in time over the full colour type of display which involves a full refresh of the whole display with each of the three colours of illumination (red, green and blue), and hence has a minimum cycle time of $3T_W$. This saving in time allows $T_W$ to be expanded while still keeping below the threshold cycle time at which flicker becomes a problem, and hence allows an expansion of the durations of strobe and data pulses, and a consequent relaxation of time constant and power consumption problems associated with high speed addressing.

The foregoing specific description with particular reference to Figure 4 has related to the provision of colour shading for a ferroelectric liquid crystal cell addressed with data pulses co-operating with unipolar strobe pulses whose polarity is inverted with each successive frame. It will be apparent however that only minor modifications to the above are necessary to adapt it for use with alternative addressing schemes such as the one using bipolar strobe pulses described in UK Patent Specification 2146473B or the one using unipolar strobe pulses in association with frame blanking described in UK Patent Specification 2173336B.

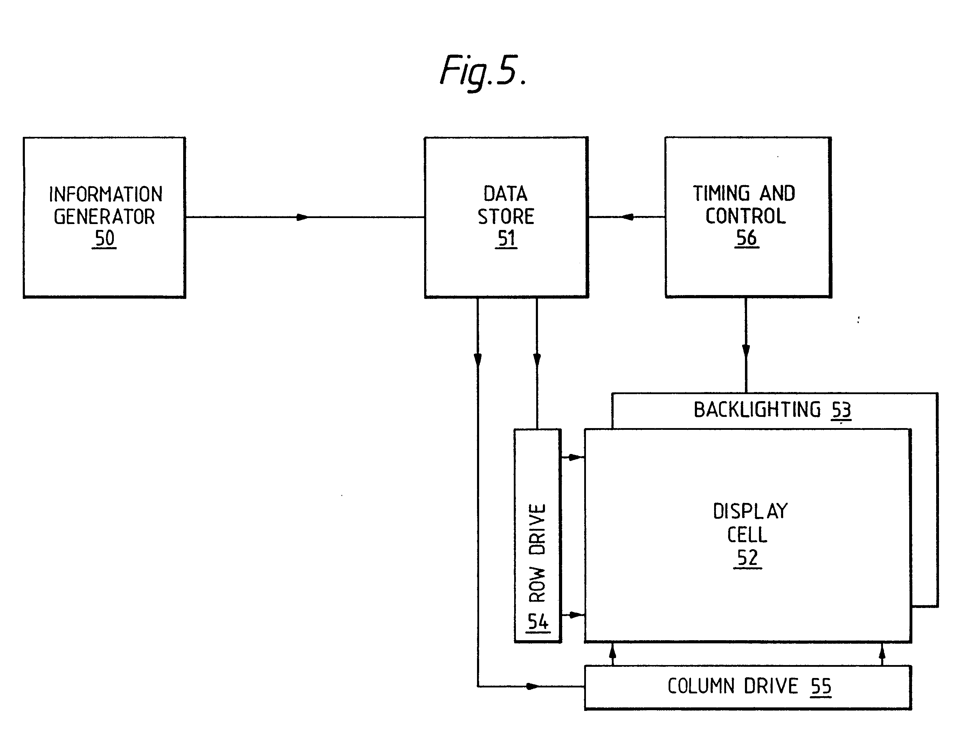

An example of a drive arrangement for the display of Figure 1 is depicted in the block diagram of Figure 5. This drive arrangement receives an input from an information generator 50, which may for instance be a computer, a data receiver, or the like. Data from the information generator is fed to a data store 51 which contains storage capacity for the complete frame of pixels forming the display and also storage capacity for identifying the shape and colour of areas of the display to be colour shaded. The provision of this data store 51 enables the drive arrangement to accept its data from the information generator 50 in a sequence and with a timing that may not be the same sequence and timing as is required for the addressing of the pixels of the display cell, which is represented at 52 in Figure 5, and for the control of its backlighting represented at 53.

The row electrodes of th cell 52 are accessed via row drivers 54 which are conveniently mounted on the display cell envelope down one side or both sides of the display area of the cell. Similarly the column electrodes of the cell are accessed via column drivers 55 which may be mounted along the top and bottom edges of the display area. (For illustrative convenience the row and column drivers have been depicted in Figure 5 as being disposed along only one edge in each instance). The row and column drivers are fed with data from the data store 51 under the control of timing circuitry 56 which also controls the operation of the backlighting 53.

## Claims

1. A method of providing a shaded display, in which method the pixels of an illuminated liquid crystal cell exhibiting bistability of operation are selectively addressed on a repetitive basis to produce a patterning of pixels with selected pixels of the cell in a first stable state and unselected pixels in the other stable state, wherein between consecutive ones of said selective addressings the illumination conditions are changed, characterised in that while the illumination conditions are changed a chosen group of the pixels of the cell is twice re-addressed, first to induce a transition only of the selected pixels that are within the chosen group from said first stable state into a metastable state, and second to induce a transition only of the selected pixels that are within the chosen group from said metastable state back into said first stable state, whereby the selected pixels within the chosen group are provided with an appearance distinguished from that of unselected pixels within the chosen group and from both selected and unselected pixels not within the chosen group.

2. A method as claimed in claim 1 wherein the illumination conditions are changed in a manner to provide an appearance for the selected pixels within the chosen group distinguished in colour from that of both selected and unselected pixels not within said chosen group.

3. A method as claimed in claim 1 or 2 wherein the liquid crystal cell is a ferroelectric cell, and wherein bistability of operation is sustained by an applied alternating potential.

4. A method as claimed in claim 3 wherein said applied alternating potential sustaining bistability of operation is furnished at least in part by bipolar data pulses applied in parallel to a first set of electrodes which co-operate with a second set of electrodes by means of which two sets of electrodes the cell is addressed on a co-ordinate basis.

5. A liquid crystal display including a liquid crystal cell exhibiting bistability of operation, cell illumination, and means for selectively addressing pixels of the display, wherein said means includes a data store and a controller which is adapted to address a set of said pixels, with data from the data store to produce a patterning of said set of pixels with selected pixels of the set in a first stable state and unselected pixels of the set in the other stable state, the cell being arranged such that pixels in the first state have an appearance contrasting with that of pixels in the other stable state, and characterised in that the controller is adapted then to address at least one subset of said set of pixels to induce a transition of the selected pixels within that subset from the first stable state into a metastable state while the controller also regulates the illumination provided by the illumination means in a manner to provide for those selected pixels within the subset an appearance distinguished from that of both selected and unselected pixels of the set which are excluded from the subset.

# Fig.1.

*Fig.2.*

*Fig.3.*

Fig.4.

*Fig.5.*

INFORMATION GENERATOR 50

DATA STORE 51

TIMING AND CONTROL 56

BACKLIGHTING 53

DISPLAY CELL 52

ROW DRIVE 54

COLUMN DRIVE 55

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 261 896 (THORN EMI) * Column 2, line 1 - column 3, line 39; column 8, lines 36-58 * | 1,5 | G 09 G 3/36 G 02 F 1/137 |
| A | PATENT ABSTRACTS OF JAPAN, vol. 12, no. 102 (P-684)[2949], 5th April 1988, page 42 P 684; & JP-A-62 234 134 (SEIKO EPSON CORP.) 14-10-1987 | 1,3-5 | |
| A | PATENT ABSTRACTS OF JAPAN, vol. 12, no. 319 (P-751)[3166], 30th August 1988; & JP-A-63 85 524 (SEIKO INSTR & ELECTRONICS LTD) 16-04-1988 | 1,3-5 | |
| A | FR-A-2 584 845 (CANON K.K.) * Page 23, line 11 - page 26, line 25 * | 1-5 | |
| A,P | EP-A-0 301 715 (THORN EMI) * Column 3, lines 5-32 * | 1 | |
| A | PATENT ABSTRACTS OF JAPAN, vol. 11, no. 354 (P-638)[2801], 10th November 1987; & JP-A-62 131 232 (HITACHI LTD) 13-06-1987 | 1 | TECHNICAL FIELDS SEARCHED (Int. Cl.4) G 02 F 1/00 G 09 G 3/00 H 04 N 3/00 |

The present search report has been drawn up for all claims

| Place of search | Date of completion of the search | Examiner |
|---|---|---|
| THE HAGUE | 30-08-1989 | DIOT P.M.L. |